# EUROPEAN PATENT SPECIFICATION

(11) **EP 3 280 102 B1**
(45) Date of publication and mention of the grant of the patent: **31.07.2019**
(21) Application number: 16890159.3
(22) Date of filing: 16.02.2016
(51) Int. Cl.: H04L 12/709, H04Q 11/00, H04L 12/703, H04J 14/02

(54) **OPTICAL PATH ALLOCATION METHOD AND APPARATUS**
VERFAHREN UND VORRICHTUNG ZUR ZUWEISUNG EINES OPTISCHEN PFADS
PROCÉDÉ ET APPAREIL D'ALLOCATION DE CHEMIN OPTIQUE

(43) Date of publication of application: 07.02.2018
(73) Proprietor: Huawei Technologies Co., Ltd., Longgang District Shenzhen, Guangdong 518129 (CN)
(72) Inventor: SUI, Zhicheng, Shenzhen Guangdong 518129 (CN)
(74) Representative: Gill Jennings & Every LLP
(86) International application number: PCT/CN2016/073882
(87) International publication number: WO 2017/139924

(56) References cited:
- WO-A1-2015/124026
- CN-A- 101 072 171
- CN-A- 101 877 612
- CN-A- 102 136 940
- CN-A- 104 618 235
- JP-B2- 5 814 850
- US-A1- 2013 089 317

## Description

### TECHNICAL FIELD

The present disclosure relates to the field of communications technologies, and in particular, to an optical path allocation method and apparatus.

### BACKGROUND

At present, a basic bearer network is an overlay network including an IP (Internet Protocol, Internet Protocol) layer and an optical layer. The IP layer includes multiple IP nodes with a topological relationship. The optical layer includes multiple optical nodes with a topological relationship. The IP layer is established above the optical layer, but information about a physical topology between the optical nodes at the optical layer cannot be disclosed to the IP layer. The optical layer establishes a "pipeline" for the IP layer in a static configuration manner, so as to interconnect the IP nodes at the IP layer.

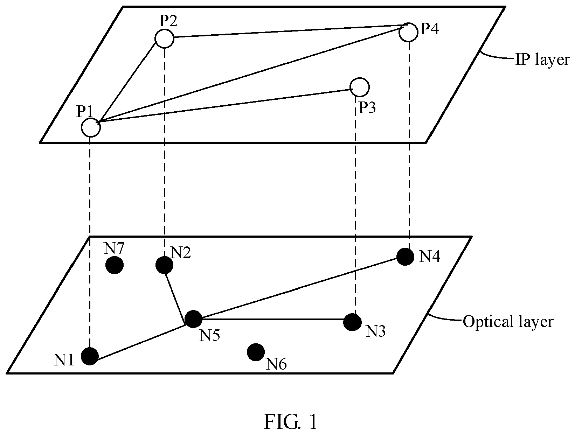

As shown in FIG. 1, the IP layer includes IP nodes P1 to P4, and the optical layer includes optical nodes N1 to N7. It is assumed that three IP paths from P1 to P2, P3, and P4 (a path between any two IP nodes at the IP layer may be referred to as an IP link, and one IP path may include at least one IP link) need to be established for executing an IP service 1. In this case, a control device at the optical layer is required to establish corresponding optical paths for the three IP paths based on topology information, delay information, bandwidth information, and the like of the current optical nodes N1 to N7 (a path between any two optical nodes at the optical layer may be referred to as an optical link, for example, an optical link may be a physical fiber, and one optical path may include at least one optical link). For example, based on a minimum delay principle, an optical path 1 corresponding to the IP path P1-P2 is set to N1-N5-N2, an optical path 2 corresponding to the IP path P1-P3 is set to N1-N5-N3, and an optical path 3 corresponding to the IP path P1-P4 is set to N1-N5-N4, so as to transmit data over the three IP paths.

The optical path 1, the optical path 2, and the optical path 3 all use a same optical link, that is, N1-N5. Therefore, once a fault occurs on the optical link N1-N5, the IP paths between P1 and P2, P1 and P3, and P1 and P4 are all disconnected, and all IP services passing through the node P1 are affected. It can be learned that a present mechanism for allocating an optical path cannot ensure topology reliability between the IP nodes, and network reliability of the entire IP layer is affected.

US 2013/0089317 relates to method and system for hybrid multi-layer mesh restoration in a communication network. WO 2015/124026 relates to flow table entry generation method and device.

### SUMMARY

Aspects of the present disclosure provide an optical path allocation method and apparatus, so as to ensure topology reliability between IP nodes and improve network reliability of an entire IP layer.

Various aspects of the present disclosure have been defined in the independent claims. Further technical features of each of these aspects have been defined in the respective dependent claims.

It can be learned that there are at least two optical links, passing through the interconnected optical node, in the optical path information, and therefore, the optical paths at the optical layer can prevent a fault at the optical layer for at least one time, thereby ensuring topology reliability between IP nodes at an upper layer.

Each IP node is interconnected with at least two IP nodes, and therefore, it can be ensured that for each IP path at the IP layer, at least one secondary path corresponding to the IP path is disposed, that is, it is ensured that a VNT (Virtual Network Topology, virtual network topology) at the IP layer can prevent a fault for at least one time.

In the present disclosure, names of the allocation apparatus do not constitute a limitation on devices. In actual implementation, the devices may be named differently. Any devices with functions similar to those of the devices in the present disclosure shall fall within the scope of the claims of the present disclosure and equivalent technologies of the claims of the present disclosure.

In addition, for technical effects of any design manner in the second aspect to the fourth aspect, reference may be made to technical effects of different design manners in the first aspect, and details are not further described herein.

These aspects or other aspects of the present disclosure are clearer and easier to understand in the descriptions of the following aspects.

### BRIEF DESCRIPTION OF DRAWINGS

To describe the technical solutions in the aspects of the present disclosure or in the prior art more clearly, the following briefly describes the accompanying drawings required for describing the aspects or the prior art.
FIG. 1 is a schematic diagram of a topology structure of an IP layer and a topology structure of an optical layer in the prior art;
FIG. 2 is a schematic diagram of an SDN architecture in the prior art;
FIG. 3 is a schematic diagram of an application scenario of an optical path allocation method according to an aspect of the present disclosure;
FIG. 4 is schematic diagram 1 of a topology structure of an IP layer and a topology structure of an optical layer according to an aspect of the present disclosure;
FIG. 5 is a schematic structural diagram of a computer device according to an aspect of the present disclosure;
FIG. 6 is flowchart 1 of an optical path allocation method according to an aspect of the present disclosure;
FIG. 7 is schematic diagram 2 of a topology structure of an IP layer and a topology structure of an optical layer according to an aspect of the present disclosure;
FIG. 8 is schematic diagram 3 of a topology structure of an IP layer and a topology structure of an optical layer according to an aspect of the present disclosure;
FIG. 9 is schematic diagram 4 of a topology structure of an IP layer and a topology structure of an optical layer according to an aspect of the present disclosure;
FIG. 10 is flowchart 2 of an optical path allocation method according to an aspect of the present disclosure;
FIG. 11 is schematic diagram 5 of a topology structure of an IP layer and a topology structure of an optical layer according to an aspect of the present disclosure;
FIG. 12 is schematic diagram 6 of a topology structure of an IP layer and a topology structure of an optical layer according to an aspect of the present disclosure; and
FIG. 13 is a schematic structural diagram of an optical path allocation apparatus according to an aspect of the present disclosure.

### DESCRIPTION OF ASPECTS

The following clearly and completely describes the technical solutions in the aspects of the present disclosure with reference to the accompanying drawings in the aspects of the present disclosure. Apparently, the described aspects are merely some but not all of the aspects of the present disclosure.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the present disclosure, unless otherwise specified, "multiple" means two or more.

Before an optical path allocation method provided in the aspects of the present disclosure is elaborated, a relationship among an IP link, an IP path, an optical link, and an optical path related to the aspects is first described.

An IP path refers to a path formed by all IP nodes bearing an IP service. For example, P1-P2-P4 in FIG. 1 is an IP path 1 bearing an IP service 1.

An IP link refers to a path between two IP nodes. The IP path specifically includes one or more IP links. For example, the IP path 1 includes two IP links, that is, P1-P2 and P2-P4.

An optical path refers to a path formed by all optical nodes, at an optical layer, corresponding to an IP path or an IP link. For example, an optical path 1 corresponding to the IP path 1 is N1-N5-N2-N4.

An optical link refers to a path between two optical nodes. The optical path specifically includes one or more optical links. For example, the optical path 1 includes three optical links, that is, N1-N5, N5-N2, and N2-N4.

It can be learned that one IP link may belong to multiple IP paths, and one optical link may also belong to multiple optical paths. A topological relationship between IP nodes at an IP layer and a topological relationship between optical nodes at an optical layer also vary with a real-time change of an IP service.

In addition, optical layer topology information related to the aspects of the present disclosure refers to a physical connection relationship between optical nodes that optical paths at an optical layer pass through. For example, in FIG. 1, optical nodes N1 and N5 are connected by using an optical fiber, and optical nodes N5 and N3 are connected by using an optical fiber. This physical topological relationship has been determined and actually exists. Optical path information related to the aspects of the present disclosure refers to a logical connection relationship, between the optical nodes that the optical paths pass through, abstracted according to a physical topological relationship reflected by the optical layer topology information. An allocation apparatus may change the logical connection relationship between the optical nodes by modifying the optical path information. Further, an optical control node at the optical layer may establish an actual physical connection relationship between the optical nodes according to the modified optical path information. For example, as shown in FIG. 1, the allocation apparatus may add an optical link between N5 and N7 to the optical path information, to obtain modified optical path information. Further, the optical control node may establish an optical fiber between N5 and N7 according to the modified optical path information.

Similarly, IP layer topology information related to the aspects of the present disclosure is similar to the optical layer topology information, and IP path information related to the aspects of the present disclosure is similar to the optical path information. Therefore, details are not further described herein.

In the prior art, during allocation of an IP path, for example, adding an IP path or deleting an IP path, topology reliability between IP nodes is not considered, that is, a topological relationship at an IP layer is always maintained to better prevent a fault at an optical layer affecting multiple IP paths. That is, in the prior art, optical paths corresponding to different IP paths at an optical layer may be carried on one optical link. Therefore, once a fault occurs on the optical link, all IP paths carried on the optical link are faulty, and IP services carried on the IP paths are all affected.

In this regard, an aspect of the present disclosure provides an optical path allocation method. The method can be implemented based on an SDN (Software Defined Networking, software-defined networking) architecture.

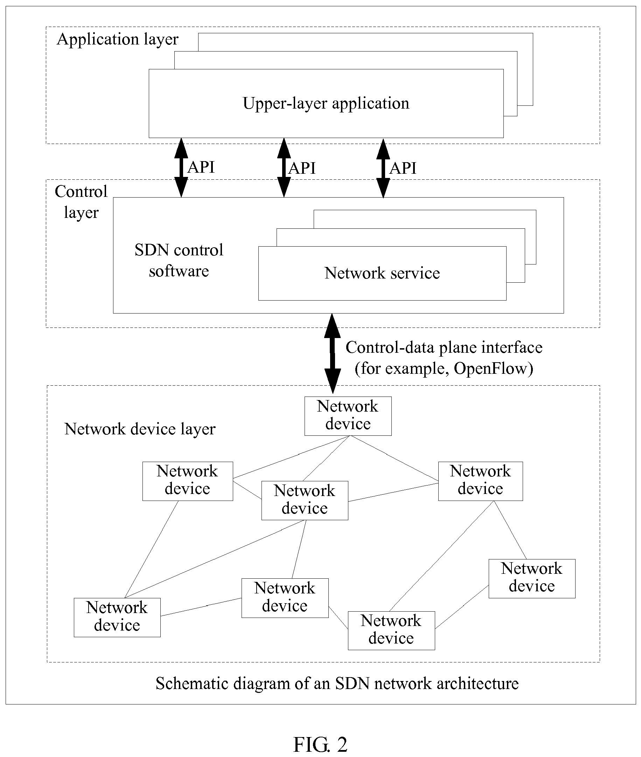

FIG. 2 is a hierarchical schematic diagram of an SDN architecture according to an aspect of the present disclosure. As shown in FIG. 2, the SDN architecture is divided into three layers. The top layer is an application layer (Application Layer) that includes various applications, network simulation, network planning, and the like. A control layer (Control Layer) in the middle is mainly responsible for orchestration of a data plane resource, maintenance of a network topology and status information, and the like. Physically, this physical layer may be placed on a standalone physical server or may be placed on multiple physical servers in a distributed manner. A network device layer (Infrastructure Layer) at the bottom is mainly responsible for flow table-based data processing, forwarding, and status collection and includes a router, a switch, and the like.

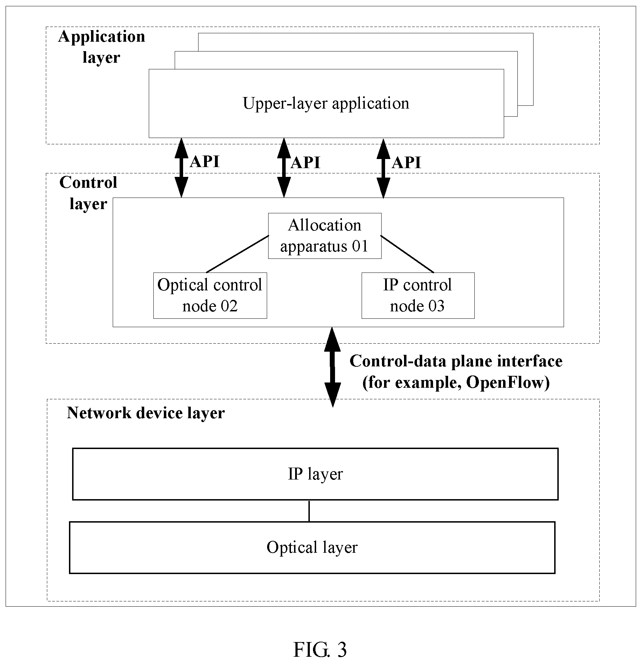

Based on the SDN architecture shown in FIG. 2, an optical path allocation method and apparatus provided in the aspects of the present disclosure are deployed at the control layer. Specifically, as shown in FIG. 3, optical nodes at an optical layer are at the bottom of the network device layer. The optical nodes at the optical layer are managed and maintained by an optical control node 02 at the control layer. IP nodes at an IP layer are above the optical layer at the network device layer. The IP nodes at the IP layer are managed and maintained by an IP control node 03 at the control layer. An optical path allocation apparatus 01 (referred to as an allocation apparatus for short in the following aspects) provided in this aspect of the present disclosure may also be deployed at the control layer. The allocation apparatus 01 may interact with both the IP control node 03 and the optical control node 02.

It should be noted that the allocation apparatus 01 may alternatively be integrated into the IP control node 03 or the optical control node 02 as a function module. This is not limited in this aspect of the present disclosure. In the following aspects, the allocation apparatus 01 is used as an example for description.

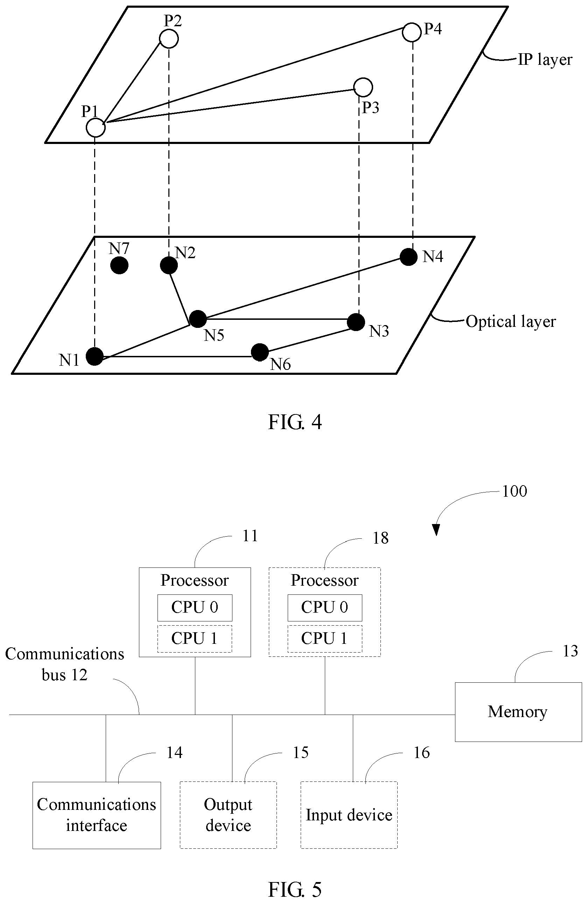

Specifically, in this aspect of the present disclosure, the allocation apparatus 01 may obtain an IP link adjustment request from the IP control node 03, for example, to add a new IP link or to delete an existing IP link. The allocation apparatus 01 may obtain current optical layer topology information from the optical control node 02. The allocation apparatus 01 may determine, according to the IP link adjustment request and the optical layer topology information, optical path information including an optical path at the optical layer, obtained after an IP link is modified. In addition, there are at least two optical links, passing through each interconnected optical node (an interconnected optical node is an optical node connected to an IP node, such as N1, N2, N3, and N4 in FIG. 4), in the optical path information.

For example, as shown in FIG. 4, an IP layer includes IP nodes P1 to P4, and an optical layer includes optical nodes N1 to N7. It is assumed that three IP paths from P1 to P2, P3, and P4 need to be established for executing an IP service 1. In this case, the allocation apparatus 01 may obtain, from the IP control node 03, identifiers of three IP links in the three IP paths that need to be newly added. The allocation apparatus 01 obtains current optical layer topology information of the optical nodes N1 to N7, and determines, according to the identifiers of the three IP links, optical path information including optical paths, at the optical layer, corresponding to the three IP links. In addition, it needs to be ensured that there are at least two optical links, passing through each interconnected optical node, in the optical path information. For example, the allocation apparatus 01 may set an optical path 1 corresponding to the IP path P1-P2 to N1-N5-N2, an optical path 2 corresponding to the IP path P1-P3 is set to N1-N6-N3, and an optical path 3 corresponding to the IP path P1-P4 is set to N1-N5-N4. It can be learned that there are two optical links passing through N1. Therefore, once a fault occurs on an optical link N1-N5, the optical node N1 may still interact with the optical node N6, and an optical link N1-N6 may still be used to support an IP service of the node P1 at the IP layer, so that the node P1 is not isolated, and the node P1 is in a scenario in which fast convergence is implemented at the IP layer.

It can be learned that there are at least two optical links, passing through the interconnected optical node, in the optical path information, and therefore, the optical paths at the optical layer can prevent a fault at the optical layer for at least one time, thereby ensuring topology reliability between IP nodes at an upper layer.

Adjustment of an IP link at the IP layer includes adding a new IP link and/or deleting an existing IP link. Therefore, in the following aspect, the optical path allocation method provided in the aspects of the present disclosure is described based on both examples of establishing a first IP link and deleting a first IP link.

As shown in FIG. 5, the allocation apparatus 01 in FIG. 4 may be implemented by a computer device (or system) in FIG. 5.

FIG. 5 is a schematic diagram of a computer device according to an aspect of the present disclosure. The computer device 100 includes at least one processor 11, a communications bus 12, a memory 13, and at least one communications interface 14.

The processor 11 may be a general-purpose central processing unit (CPU), a microprocessor, an application-specific integrated circuit (application-specific integrated circuit, ASIC), or one or more integrated circuits used to control program execution in solutions of the present disclosure.

The communications bus 12 may include a path for transferring information between the foregoing components. The communications interface 14, an apparatus using any transceiver or the like, is configured to communicate with another device or a communications network, such as an Ethernet network, a radio access network (RAN), and a wireless local area network (Wireless Local Area Networks, WLAN).

The memory 13 may be a read-only memory (read-only memory, ROM) or another type of a static storage device that can store static information and an instruction, a random access memory (random access memory, RAM) or another type of a dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM), another optical disc storage (including a compact optical disc, a laser disc, an optical disc, a digital versatile disc, a Blu-ray disc, and the like), and a magnetic disk storage medium or another magnetic storage device, or any other media that can be used to carry or store expected program code in a form of an instruction or a data structure and can be accessed by a computer. The present disclosure does not limit thereto. The memory 13 may exist alone or be connected to a processor by using a bus. The memory 13 may alternatively be integrated with a processor.

The memory 13 is configured to store application program code for executing the solutions of the present disclosure. The processor 11 is configured to execute the application program code stored in the memory 13.

In specific implementation, in an aspect, the processor 11 may include one or more CPUs, such as a CPU 0 and a CPU 1 in FIG. 5.

In specific implementation, in an aspect, the computer device 100 may include multiple processors, for example, the processor 11 and a processor 18 in FIG. 5. Each of the processors may be a single-core (single-CPU) processor or a multi-core (multi-CPU) processor. The processor herein may refer to one or more devices, circuits, and/or processing cores configured to process data (for example, a computer program instruction).

In specific implementation, in an aspect, the computer device 100 may further include an output device 15 and an input device 16. The output device 15 communicates with the processor 11 and can display information in multiple manners. For example, the output device 15 may be a liquid crystal display (liquid crystal display, LCD), a light emitting diode (light emitting diode, LED) display device, a cathode ray tube (cathode ray tube, CRT) display device, a projector (projector), or the like. The input device 16 communicates with the processor 11 and can receive input from a user in multiple manners. For example, the input device 16 may be a mouse, a keyboard, a touchscreen device, a sensing device, or the like.

The computer device 100 may be a general-purpose computer device or a dedicated computer device. In specific implementation, the computer device 100 may be a desktop computer, a portable computer, a network server, a personal digital assistant (Personal Digital Assistant, PDA), a mobile phone, a tablet computer, a wireless terminal device, a communications device, an embedded device, or a device with a structure similar to that in FIG. 5. This aspect of the present disclosure does not limit a type of the computer device 100.

It should be noted that in this aspect of the present disclosure, any function node in an SDN architecture-based optical path allocation system, for example, the allocation apparatus 01, may be implemented by one entity device or by multiple entity devices. Multiple function nodes in the system may be implemented by different entity devices respectively or by a same entity device. It can be understood that any function node in the system may be a logical function module in an entity device or a logical function module including multiple entity devices.

Therefore, in the following aspect of the present disclosure, one entity device may perform steps in the method provided by the aspects of the present disclosure or multiple entity devices may collaboratively perform steps in the method provided by the aspects of the present disclosure. This is not limited in the present disclosure.

### Aspect 1

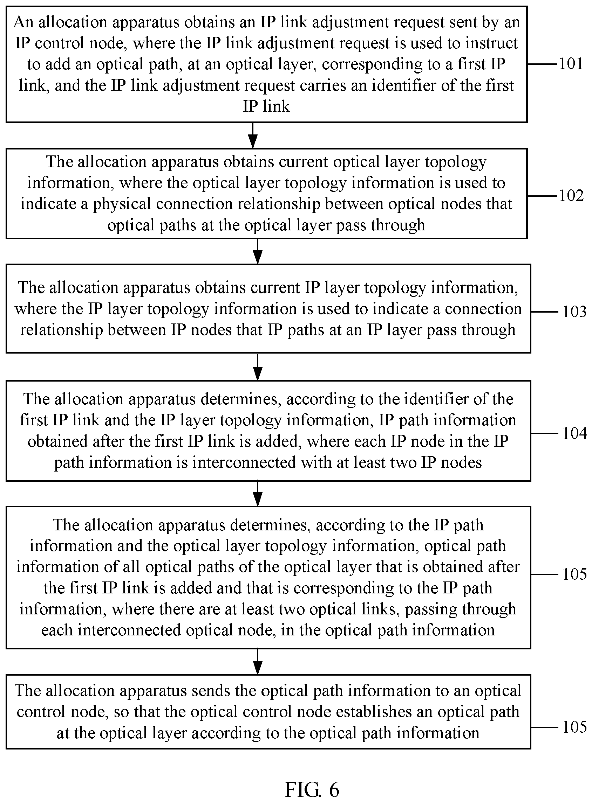

This aspect of the present disclosure provides an optical path allocation method. As shown in FIG. 6, the method includes the following steps.
101. An allocation apparatus obtains an IP link adjustment request sent by an IP control node, where the IP link adjustment request is used to instruct to add an optical path, at an optical layer, corresponding to a first IP link, and the IP link adjustment request carries an identifier of the first IP link.
102. The allocation apparatus obtains current optical layer topology information, where the optical layer topology information is used to indicate a physical connection relationship between optical nodes that optical paths at the optical layer pass through.
103. The allocation apparatus obtains current IP layer topology information, where the IP layer topology information is used to indicate a connection relationship between IP nodes that IP paths at an IP layer pass through.
104. The allocation apparatus determines, according to the identifier of the first IP link and the IP layer topology information, IP path information obtained after the first IP link is added, where each IP node in the IP path information is interconnected with at least two IP nodes.
105. The allocation apparatus determines, according to the IP path information and the optical layer topology information, optical path information of all optical paths of the optical layer that is obtained after the first IP link is added and that is corresponding to the IP path information, where there are at least two optical links, passing through each interconnected optical node, in the optical path information.
106. The allocation apparatus sends the optical path information to an optical control node, so that the optical control node establishes an optical path at the optical layer according to the optical path information.

After an IP service at the IP layer is adjusted, for example, a new IP service needs to be created, the IP control node obtains through calculation an IP path, bearing the new IP service, at the IP layer according to a requirement of the new IP service.

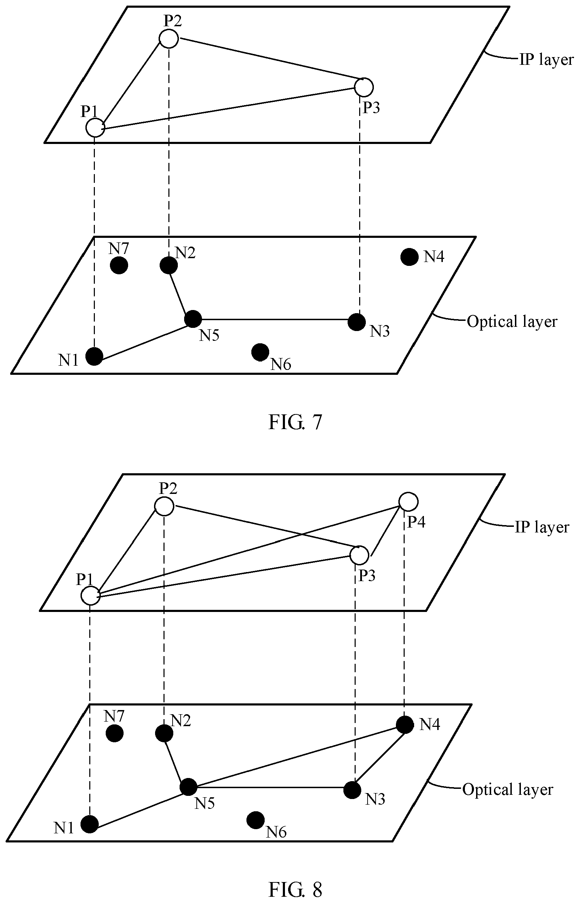

For example, an original topological relationship of the IP layer and an original topological relationship of the optical layer are shown in FIG. 7. The IP layer includes nodes P1 to P3. An optical link corresponding to an IP link P1-P2 is N1-N5-N2. An optical link corresponding to an IP link P1-P3 is N1-N5-N3. An optical link corresponding to an IP link P2-P3 is N2-N5-N3. As shown in FIG. 8, after an IP service is adjusted, a new IP node P4 is deployed at the IP layer. In this case, an IP path that needs to be established for a new IP service is P1-P3-P4. Because the establishment of the IP path may cause existing IP links to change, that is, a first IP link P3-P4 needs to be established, the IP control node sends an IP link adjustment request to an allocation apparatus, to instruct to add an optical path, at the optical layer, corresponding to the first IP link. As described in step 101, the allocation apparatus obtains the IP link adjustment request sent by the IP control node, and the IP link adjustment request carries the identifier of the first IP link that needs to be established in the IP path, for example, identifiers of the node P3 and the node P4.

Further, in step 102 and step 103, the allocation apparatus obtains both the current optical layer topology information and the current IP layer topology information.

Specifically, the allocation apparatus can monitor the optical control node and the IP control node in real time. Therefore, the allocation apparatus may obtain the current optical layer topology information from the optical control node and obtain the IP layer topology information from the IP control node.

Certainly, the optical control node and the IP control node may alternatively report their respective topology information to the allocation apparatus on a regular basis. The allocation apparatus stores the topology information in a storage unit of the allocation apparatus. In this case, the allocation apparatus may obtain the current optical layer topology information and the current IP layer topology information from the storage unit of the allocation apparatus.

In step 104, the allocation apparatus determines, according to the identifier of the first IP link and the IP layer topology information, the IP path information obtained after the first IP link is added, so that each IP node at the IP layer is interconnected with at least two IP nodes, and it is ensured that for each IP path at the IP layer, at least one secondary path corresponding to the IP path is disposed, that is, it is ensured that a VNT (Virtual Network Topology, virtual network topology) at the IP layer can prevent a fault for at least one time.

Specifically, the allocation apparatus adds the first IP link to the IP path information according to the identifier of the first IP link. The first IP link is an IP link between a first IP node and a second IP node. Still using FIG. 8 as an example, after the new IP path P1-P3-P4 is added, the first IP link P3-P4 needs to be added to the IP path information. P3 is a first IP node and P4 is a second IP node. In this case, the second IP node P4 is interconnected only with the first IP node P3. After a fault occurs on the IP link P3-P4, the node P4 is isolated and cannot undertake a corresponding IP service. Therefore, a second IP link between the second IP node and another IP node may be added to the IP path information, for example, a second IP link P4-P1 may be added to the IP layer topology information.

In this way, it can be ensured that after a fault occurs on the IP link P3-P4, the node P4 can still perform data exchange by using the IP link between the node P4 and the node P1, so that the VNT at the IP layer can prevent a fault for at least one time.

Further, in step 105, the allocation apparatus determines, according to the IP path information in step 104 and the optical layer topology information in step 102, the optical path information obtained after the first IP link is added, so that there are at least two optical links, passing through the interconnected optical node, in the optical path information.

Specifically, the allocation apparatus may determine, according to the optical layer topology information, optical path information of the optical layer obtained before the first IP link is added, and further determine, according to the modified IP link in the IP path information, the optical path information of the optical layer that is obtained after the first IP link is added and that is corresponding to the IP path information. For example, still using FIG. 8 as an example, the first IP link P3-P4 and the second IP link P4-P1 are newly added to the IP layer topology information. Therefore, an optical path 1 corresponding to P3-P4 and an optical path 2 corresponding to P4-P1 may be added. For example, the optical path 1 is N3-N4 and the optical path 2 is N4-N5-N1.

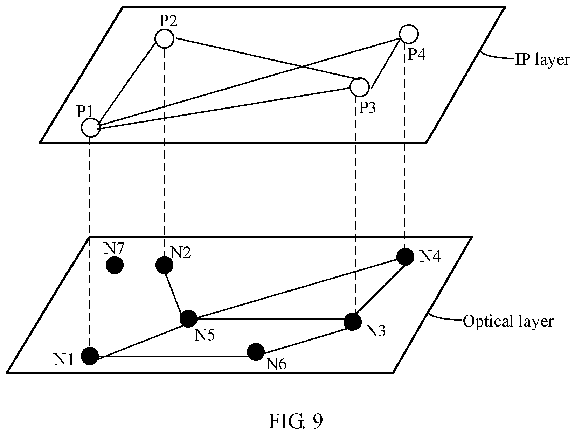

Further, the allocation apparatus determines whether there are at least two optical links, passing through the interconnected optical node, in the optical path information after the link is added. As shown in FIG. 8, there is only one optical link passing through the interconnected optical node N1, that is, an optical link N1-N5. Therefore, once a fault occurs on the optical link N1-N5, links between P1 and P2, P1 and P3, and P1 and P4 are all disconnected, and all IP services passing through the node P1 are affected. Therefore, to ensure topology reliability between the IP nodes, the allocation apparatus needs to re-adjust an optical path in the optical path information. For example, as shown in FIG. 9, an optical path corresponding to P1-P3 is modified to be N1-N6-N3 until there are at least two optical links passing through each interconnected optical node.

Finally, in step 106, the allocation apparatus sends the optical path information in step 105 to the optical control node, so that the optical control node establishes the corresponding optical path at the optical layer according to the optical path information.

After establishing the optical path according to the optical path information, the optical control node may further send a response message to the IP control node, so as to trigger the IP control node to update, according to the modified IP path information in step 104, a topological relationship between IP nodes at the IP layer, and finally to meet a requirement of an IP service.

It should be noted that step 103 and step 104 are optional steps. That is, the allocation apparatus may determine, directly according to the identifier of the first IP link and the optical layer topology information, the optical path information obtained after the first IP link is added, so that there are at least two optical links, passing through the interconnected optical node, in the optical path information.

In addition, before step 101, after the IP service at the IP layer is adjusted, the IP control node may modify the IP layer topology information according to the IP path of the new IP service that is obtained through calculation, so that each IP node at the IP layer is interconnected with at least two IP nodes.

In this case, the IP control node may send, to the allocation apparatus, an identifier or identifiers of one or more first IP links that needs or need to be established in the modified IP layer topology information, so that the allocation apparatus allocates the optical path according to steps 101 to 106.

This aspect of the present disclosure provides an optical path allocation method. An allocation apparatus may obtain an IP link adjustment request from an IP control node, and the IP link adjustment request is used to instruct to add an optical path, at an optical layer, corresponding to a first IP link, and the IP link adjustment request carries an identifier of the first IP link that needs to be added to an IP path. The allocation apparatus may obtain current optical layer topology information from an optical control node. The allocation apparatus may determine, according to the IP link adjustment request and the optical layer topology information, optical path information of the optical layer obtained after the first IP link is added, and there are at least two optical links, passing through each interconnected optical node, in the optical path information, so that after the optical control node establishes one or more optical paths at the optical layer according to the optical path information, there are at least two optical links, passing through the interconnected optical node, in obtained optical layer topology information, Therefore, the optical path at the optical layer can prevent a fault at the optical layer for at least one time, thereby ensuring topology reliability between IP nodes at an upper layer and improving network reliability of an entire IP layer.

### Aspect 2

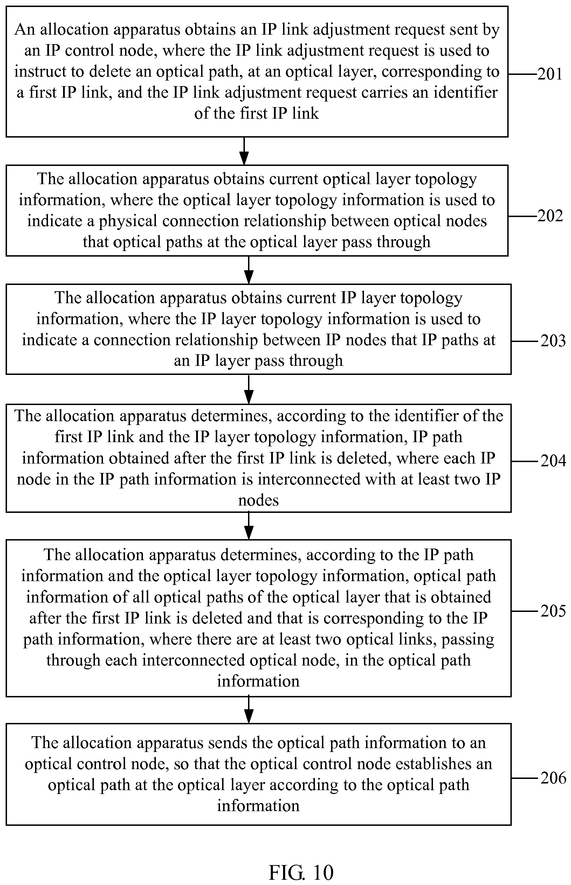

This aspect of the present disclosure provides an optical path allocation method. As shown in FIG. 10, the method includes the following steps.
201. An allocation apparatus obtains an IP link adjustment request sent by an IP control node, where the IP link adjustment request is used to instruct to delete an optical path, at an optical layer, corresponding to a first IP link, and the IP link adjustment request carries an identifier of the first IP link.
202. The allocation apparatus obtains current optical layer topology information, where the optical layer topology information is used to indicate a physical connection relationship between optical nodes that optical paths at the optical layer pass through.
203. The allocation apparatus obtains current IP layer topology information, where the IP layer topology information is used to indicate a connection relationship between IP nodes that IP paths at an IP layer pass through.
204. The allocation apparatus determines, according to the identifier of the first IP link and the IP layer topology information, IP path information obtained after the first IP link is deleted, where each IP node in the IP path information is interconnected with at least two IP nodes.
205. The allocation apparatus determines, according to the IP path information and the optical layer topology information, optical path information of all optical paths of the optical layer that is obtained after the first IP link is deleted and that is corresponding to the IP path information, where there are at least two optical links, passing through each interconnected optical node, in the optical path information.
206. The allocation apparatus sends the optical path information to an optical control node, so that the optical control node establishes an optical path at the optical layer according to the optical path information.

After an IP service at the IP layer is adjusted, the IP control node determines, according to a requirement of the IP service, an IP link that needs to be deleted.

For example, an original topological relationship of the IP layer and an original topological relationship of the optical layer are shown in FIG. 9. The IP layer includes nodes P1 to P4. An optical link corresponding to an IP link P1-P2 is N1-N5-N2. An optical link corresponding to an IP link P1-P3 is N1-N6-N3. An optical link corresponding to an IP link P2-P3 is N2-N5-N3. An optical link corresponding to an IP link P1-P4 is N1-N5-N4. An optical link corresponding to an IP link P3-P4 is N3-N4.

In this case, if the IP link P1-P3 needs to be deleted, the IP control node sends the IP link adjustment request to an allocation apparatus, to instruct to delete the optical path, at the optical layer, corresponding to the first IP link. As described in step 201, the allocation apparatus obtains the IP link adjustment request sent by the IP control node, and the IP link adjustment request carries the identifier of the first IP link that needs to be deleted, for example, identifiers of the node P3 and the node P1.

Further, in step 202 and step 203, the allocation apparatus obtains both the current optical layer topology information and the current IP layer topology information.

Specifically, the allocation apparatus can monitor the optical control node and the IP control node in real time. Therefore, the allocation apparatus may obtain the current optical layer topology information from the optical control node and obtain the IP layer topology information from the IP control node.

Certainly, the optical control node and the IP control node may alternatively report their respective topology information to the allocation apparatus on a regular basis. The allocation apparatus stores the topology information in a storage unit of the allocation apparatus. In this case, the allocation apparatus may obtain the current optical layer topology information and the current IP layer topology information from the storage unit of the allocation apparatus.

In step 204, the allocation apparatus determines, according to the identifier of the first IP link and the IP layer topology information, the IP path information obtained after the first IP link is deleted, so that for each IP path at the IP layer, at least one secondary path corresponding to the IP path is disposed, that is, it is ensured that a VNT at the IP layer can prevent a fault for at least one time.

Specifically, the allocation apparatus determines, according to the IP layer topology information, IP path information obtained before the first IP link is deleted. Further, the allocation apparatus deletes the first IP link from the IP path information according to the identifier of the first IP link, to obtain the IP path information obtained after the first IP link is deleted, and ensures that for each IP path at the IP layer, at least one secondary path corresponding to the IP path is disposed. Still using FIG. 9 as an example, the first IP link is P1-P3. In this case, P1, P2, and P3 are all interconnected with at least two IP nodes, and therefore, the VNT at the IP layer can prevent a fault for at least one time.

However, if any IP node (for example, an IP node 1) at the IP layer is interconnected only with one IP node (for example, an IP node 2), when a fault occurs on an IP link IP node 1-IP node 2, the IP node 1 is isolated and cannot undertake a corresponding IP service. Therefore, a second IP link between the IP node 1 and another IP node may be added to IP layer topology information. In this way, it can be ensured that the VNT at the IP layer can prevent a fault for at least one time after an IP link is adjusted.

Further, in step 205, the allocation apparatus determines, according to the IP path information in step 204 and the optical layer topology information in step 202, the optical path information obtained after the first IP link is deleted, so that there are at least two optical links, passing through the interconnected optical node, in the optical path information.

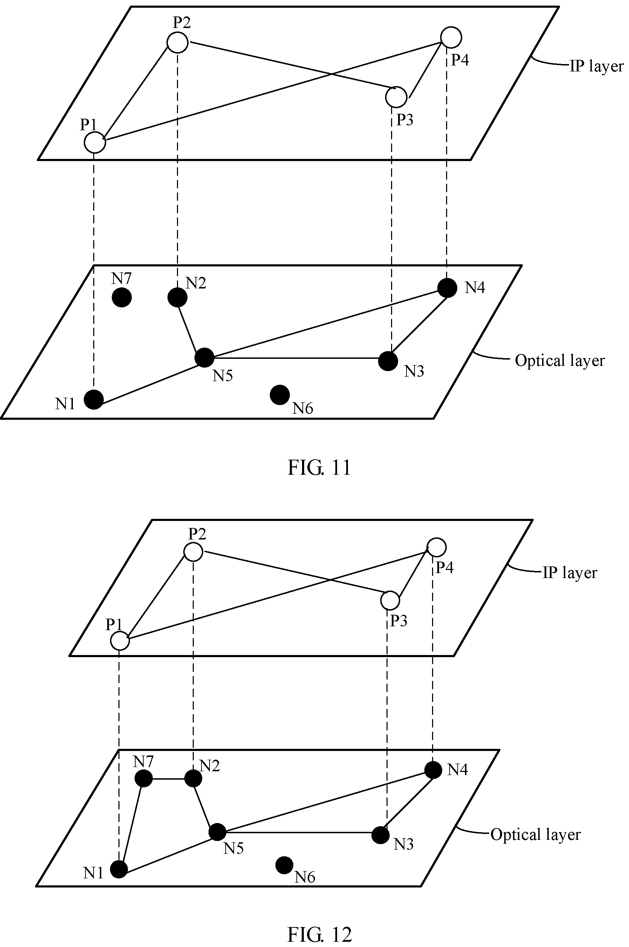

Specifically, the allocation apparatus may determine, according to the optical layer topology information in step 202, optical path information of the optical layer obtained before the first IP link is deleted. Further, the allocation apparatus determines, according to the modified IP link in the IP path information in step 204, the optical path information of the optical layer, obtained after the first IP link is deleted, corresponding to the IP path information. For example, still using FIG. 10 as an example, the first IP link P1-P3 is deleted from the IP layer topology information, and therefore, the optical path N1-N6-N3 corresponding to P1-P3 is correspondingly deleted. In this case, a topology network of the IP layer and a topology network of the optical layer are shown in FIG. 11.

Further, the allocation apparatus determines whether there are at least two optical links, passing through the interconnected optical node, in the optical path information after the link is deleted. As shown in FIG. 11, there is only one optical link passing through the interconnected optical node N1, that is, an optical link N1-N5. Therefore, once a fault occurs on the optical link N1-N5, links between P1 and P2, P1 and P3, and P1 and P4 are all disconnected, and all IP services passing through the node P1 are affected. Therefore, to ensure topology reliability between the IP nodes, the allocation apparatus needs to re-adjust an optical path in the optical path information. For example, as shown in FIG. 12, the optical path corresponding to P1-P3 is modified to be N1-N7-N3 until there are at least two optical links passing through each interconnected optical node.

When collecting statistics on a quantity of optical links, passing through each interconnected optical node, in the optical path information, the allocation apparatus may cut a topology network, connected to a first interconnected optical node (the first interconnected optical node is any one of all interconnected optical nodes at the optical layer), in the optical path information by using any cutting line. Further, the allocation apparatus calculates a quantity of optical links that the cutting line passes through, and uses the quantity of optical links that the cutting line passes through as a quantity of optical links passing through the first interconnected optical node. Specifically, if there is one optical link passing through the first interconnected optical node, the allocation apparatus determines that there is only one optical link, passing through the first interconnected optical node, in the optical path information; otherwise, the allocation apparatus determines that there are at least two optical links, passing through the first interconnected optical node, in the optical path information.

Similarly, the foregoing step may be repeated to collect statistics on the quantity of optical links, passing through each interconnected optical node, in the optical path information.

Finally, in step 206, the allocation apparatus sends the optical path information in step 205 to the optical control node, so that the optical control node establishes the corresponding optical path at the optical layer according to the optical path information.

After establishing the optical path according to the optical path information, the optical control node may further send a response message to the IP control node, so as to trigger the IP control node to update, according to the modified IP path information in step 204, a topological relationship between IP nodes at the IP layer, and finally to meet a requirement of an IP service.

Similar to Aspect 1, step 203 and step 204 are optional steps. That is, the allocation apparatus may determine, directly according to the identifier of the first IP link and the optical layer topology information, the optical path information obtained after the first IP link is deleted, so that there are at least two optical links, passing through the interconnected optical node, in the optical path information.

This aspect of the present disclosure provides an optical path allocation method. An allocation apparatus may obtain an IP link adjustment request from an IP control node, and the IP link adjustment request is used to instruct to delete an optical path, at an optical layer, corresponding to a first IP link, and the IP link adjustment request carries an identifier of the first IP link that needs to be deleted from an IP path. The allocation apparatus may obtain current optical layer topology information from an optical control node. The allocation apparatus may determine, according to the IP link adjustment request and the optical layer topology information, optical path information of the optical layer obtained after the first IP link is deleted, and there are at least two optical links, passing through each interconnected optical node, in the optical path information, so that after the optical control node establishes one or more optical paths at the optical layer according to the optical path information, there are at least two optical links, passing through the interconnected optical node, in obtained optical layer topology information. Therefore, the optical path at the optical layer can prevent a fault at the optical layer for at least one time, thereby ensuring topology reliability between IP nodes at an upper layer and improving network reliability of an entire IP layer.

### Aspect 3

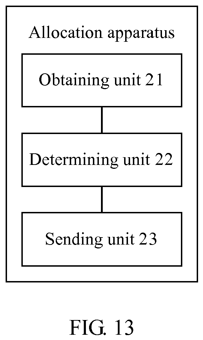

FIG. 13 is a schematic structural diagram of an optical path allocation apparatus (referred to as an allocation apparatus for short in the following aspect) according to an aspect of the present disclosure. The allocation apparatus provided in this aspect of the present disclosure may be configured to implement the method implemented in the aspects of the present disclosure in FIG. 2 to FIG. 12. For ease of description, only a part related to this aspect of the present disclosure is shown. For undisclosed specific technical details, reference may be made to the aspects of the present disclosure in FIG. 2 to FIG. 12.

Specifically, as shown in FIG. 13, the allocation apparatus includes an obtaining unit 21, a determining unit 22, and a sending unit 23.

The obtaining unit 21 is configured to receive an IP link adjustment request sent by an IP control node, where the IP link adjustment request carries an identifier of a first IP link that needs to be modified; and obtain current optical layer topology information, where the optical layer topology information is used to indicate a physical connection relationship between optical nodes that optical paths at the optical layer pass through.

The determining unit 22 is configured to determine optical path information according to the identifier of the first IP link and the optical layer topology information, where the optical path information is used to indicate all optical paths at the optical layer that are obtained after the first IP link is modified, there are at least two optical links, passing through each interconnected optical node, in the optical path information, and the interconnected optical node is an optical node connected to an IP node.

The sending unit 23 is configured to send the optical path information to an optical control node, so that the optical control node establishes an optical path at the optical layer according to the optical path information.

Further, the IP link adjustment request is used to instruct to add an optical path, at the optical layer, corresponding to the first IP link.

The obtaining unit 21 is further configured to obtain current IP layer topology information, where the IP layer topology information is used to indicate a connection relationship between IP nodes that IP paths at an IP layer pass through.

The determining unit 22 is specifically configured to determine, according to the identifier of the first IP link and the IP layer topology information, IP path information obtained after the first IP link is added, where each IP node in the IP path information is interconnected with at least two IP nodes; and determine the optical path information according to the IP path information and the optical layer topology information, so as to determine the optical path, at the optical layer, corresponding to the first IP link.

Further, the determining unit 22 is specifically configured to add the first IP link to the IP path information according to the identifier of the first IP link, where the first IP link is an IP link between a first IP node and a second IP node; if the first IP node is interconnected only with the second IP node, add a second IP link between the first IP node and another IP node to the IP path information; and if the second IP node is interconnected only with the first IP node, add a third IP link between the second IP node and another IP node to the IP path information.

Further, the determining unit 22 is specifically configured to determine, according to the IP path information and the optical layer topology information, optical path information that is of the optical layer and corresponding to each IP link in the IP path information; collect statistics on a quantity of optical links, passing through each interconnected optical node, in the optical path information; and if there is only one optical link passing through each interconnected optical node, re-adjust an optical path, corresponding to any IP link, in the optical path information until there are at least two optical links passing through each interconnected optical node.

Further, the IP link adjustment request is used to instruct to delete an optical path, at the optical layer, corresponding to the first IP link. The determining unit 22 is specifically configured to delete the optical path, at the optical layer, corresponding to the first IP link from the optical path information; collect statistics on a quantity of optical links, passing through each interconnected optical node, in the optical path information; and if there is only one optical link passing through each interconnected optical node, re-adjust an optical path, corresponding to any IP link, in the optical path information until there are at least two optical links passing through each interconnected optical node.

Further, the determining unit 22 is specifically configured to delete the first IP link from the IP path information; and if there is only one IP link passing through any IP node, re-adjust a connection relationship between IP nodes in the IP path information, so that each IP node is interconnected with at least two IP nodes.

Further, the determining unit 22 is specifically configured to cut a topology network, connected to a first interconnected optical node, in the optical path information by using any cutting line, where the first interconnected optical node is any one of all interconnected optical nodes at the optical layer; and use a quantity of optical links that the cutting line passes through as a quantity of optical links passing through the first interconnected optical node.

The obtaining unit 21, the determining unit 22, and the sending unit 23 may be all implemented by the processor 11 by calling an instruction in the memory 13 shown in FIG. 5.

This aspect of the present disclosure provides an optical path allocation apparatus. An allocation apparatus may obtain an IP link adjustment request from an IP control node, and the IP link adjustment request is used to instruct to modify an optical path, at an optical layer, corresponding to a first IP link, and the IP link adjustment request carries an identifier of the first IP link that needs to be modified. The allocation apparatus may obtain current optical layer topology information from an optical control node. The allocation apparatus may determine, according to the IP link adjustment request and the optical layer topology information, optical path information of the optical layer obtained after the first IP link is modified, and there are at least two optical links, passing through each interconnected optical node, in the optical path information, so that after the optical control node establishes one or more optical paths at the optical layer according to the optical path information, there are at least two optical links, passing through the interconnected optical node, in obtained optical layer topology information. Therefore, the optical path at the optical layer can prevent a fault at the optical layer for at least one time, thereby ensuring topology reliability between IP nodes at an upper layer and improving network reliability of an entire IP layer.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method aspects, and details are not further described herein.

In the several aspects provided in this application, it should be understood that the disclosed system, apparatus, and method may be implemented in other manners. For example, the described apparatus aspect is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the aspects.

In addition, functional units in the aspects of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the aspects of the present disclosure. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical path allocation method, wherein the method is applied to an overlay network comprising an Internet Protocol, IP layer and an optical layer, the IP layer comprises multiple IP nodes managed by an IP control node, the optical layer comprises multiple optical nodes managed by an optical control node, and the method comprises:
receiving (101) an IP link adjustment request sent by the IP control node, wherein the IP link adjustment request carries an identifier of a first IP link that needs to be added or deleted;
obtaining (102) current optical layer topology information, wherein the optical layer topology information is used to indicate a physical connection relationship between optical nodes that optical paths at the optical layer pass through;
determining optical path information according to the identifier of the first IP link and the optical layer topology information, wherein the optical path information is used to indicate all optical paths at the optical layer that are obtained after the first IP link is added or deleted, there are at least two optical links passing through each interconnected optical node, in the optical path information, and the interconnected optical node is an optical node connected to an IP node; and
sending (106) the optical path information to the optical control node, so that the optical control node establishes an optical path at the optical layer according to the optical path information.

2. The method according to claim 1, wherein the IP link adjustment request is used to instruct to add an optical path, at the optical layer, corresponding to the first IP link;
after the obtaining current optical layer topology information, the method further comprises:
obtaining (103) current IP layer topology information, wherein the IP layer topology information is used to indicate a connection relationship between IP nodes that IP paths at the IP layer pass through; and
the determining optical path information according to the identifier of the first IP link and the optical layer topology information comprises:
determining (104), according to the identifier of the first IP link and the IP layer topology information, IP path information obtained after the first IP link is added, wherein each IP node in the IP path information is interconnected with at least two IP nodes; and
determining (105) the optical path information according to the IP path information and the optical layer topology information, so as to determine the optical path, at the optical layer, corresponding to the first IP link.

3. The method according to claim 2, wherein the determining, according to the identifier of the first IP link and the IP layer topology information, IP path information obtained after the first IP link comprises:
adding the first IP link to the IP path information according to the identifier of the first IP link, wherein the first IP link is an IP link between a first IP node and a second IP node;
if the first IP node is interconnected only with the second IP node, adding a second IP link between the first IP node and another IP node to the IP path information; and
if the second IP node is interconnected only with the first IP node, adding a third IP link between the second IP node and another IP node to the IP path information.

4. The method according to claim 2 or 3, wherein the determining the optical path information according to the IP path information and the optical layer topology information comprises:
determining, according to the IP path information and the optical layer topology information, optical path information that is of the optical layer and corresponding to each IP link in the IP path information;
collecting statistics on a quantity of optical links, passing through each interconnected optical node, in the optical path information; and
if there is only one optical link passing through each interconnected optical node, re-adjusting an optical path, corresponding to any IP link, in the optical path information until there are at least two optical links passing through each interconnected optical node.

5. The method according to any one of claims 1 to 4, wherein the IP link adjustment request is used to instruct to delete an optical path, at the optical layer, corresponding to the first IP link; and
the determining optical path information according to the identifier of the first IP link and the optical layer topology information comprises:
deleting the optical path, at the optical layer, corresponding to the first IP link from the optical path information;
collecting statistics on a quantity of optical links, passing through each interconnected optical node, in the optical path information; and
if there is only one optical link passing through each interconnected optical node, re-adjusting an optical path, corresponding to any IP link, in the optical path information until there are at least two optical links passing through each interconnected optical node.

6. The method according to claim 5, before the deleting the optical path, at the optical layer, corresponding to the first IP link from the optical path information, further comprising:
deleting the first IP link from the IP path information; and
if there is only one IP link passing through any IP node, re-adjusting a connection relationship between IP nodes in the IP path information, so that each IP node is interconnected with at least two IP nodes.

7. The method according to claim 4 or 5, the collecting statistics on a quantity of optical links, passing through each interconnected optical node, in the optical path information comprises:
cutting a topology network, connected to a first interconnected optical node, in the optical path information by using any cutting line, wherein the first interconnected optical node is any one of all interconnected optical nodes at the optical layer; and
using a quantity of optical links that the cutting line passes through as a quantity of optical links passing through the first interconnected optical node.

8. An optical path allocation apparatus, wherein the allocation apparatus is applied to an overlay network comprising an Internet Protocol IP layer and an optical layer, the IP layer comprises multiple IP nodes managed by an IP control node, the optical layer comprises multiple optical nodes managed by an optical control node, and the allocation apparatus comprises:
an obtaining unit (21), configured to receive an IP link adjustment request sent by the IP control node, wherein the IP link adjustment request carries an identifier of a first IP link that needs to be added or deleted; and obtain current optical layer topology information, wherein the optical layer topology information is used to indicate a physical connection relationship between optical nodes that optical paths at the optical layer pass through;
a determining unit (22), configured to determine optical path information according to the identifier of the first IP link and the optical layer topology information, wherein the optical path information is used to indicate all optical paths at the optical layer that are obtained after the first IP link is added or deleted, there are at least two optical links passing through each interconnected optical node, in the optical path information, and the interconnected optical node is an optical node connected to an IP node; and
a sending unit (23), configured to send the optical path information to the optical control node, so that the optical control node establishes an optical path at the optical layer according to the optical path information.

9. The allocation apparatus according to claim 8, wherein the IP link adjustment request is used to instruct to add an optical path, at the optical layer, corresponding to the first IP link;
the obtaining unit is further configured to obtain current IP layer topology information, wherein the IP layer topology information is used to indicate a connection relationship between IP nodes that IP paths at the IP layer pass through; and
the determining unit is specifically configured to determine, according to the identifier of the first IP link and the IP layer topology information, IP path information obtained after the first IP link is added, wherein each IP node in the IP path information is interconnected with at least two IP nodes; and determine the optical path information according to the IP path information and the optical layer topology information, so as to determine the optical path, at the optical layer, corresponding to the first IP link.

10. The allocation apparatus according to claim 9, wherein
the determining unit is specifically configured to add the first IP link to the IP path information according to the identifier of the first IP link, wherein the first IP link is an IP link between a first IP node and a second IP node; if the first IP node is interconnected only with the second IP node, add a second IP link between the first IP node and another IP node to the IP path information; and if the second IP node is interconnected only with the first IP node, add a third IP link between the second IP node and another IP node to the IP path information.

11. The allocation apparatus according to claim 9 or 10, wherein
the determining unit is specifically configured to determine, according to the IP path information and the optical layer topology information, optical path information that is of the optical layer and corresponding to each IP link in the IP path information; collect statistics on a quantity of optical links, passing through each interconnected optical node, in the optical path information; and if there is only one optical link passing through each interconnected optical node, re-adjust an optical path, corresponding to any IP link, in the optical path information until there are at least two optical links passing through each interconnected optical node.

12. The allocation apparatus according to any one of claims 8 to 11, wherein the IP link adjustment request is used to instruct to delete an optical path, at the optical layer, corresponding to the first IP link; and
the determining unit is specifically configured to delete the optical path, at the optical layer, corresponding to the first IP link from the optical path information; collect statistics on a quantity of optical links, passing through each interconnected optical node, in the optical path information; and if there is only one optical link passing through each interconnected optical node, re-adjust an optical path, corresponding to any IP link, in the optical path information until there are at least two optical links passing through each interconnected optical node.

13. The allocation apparatus according to claim 12, wherein
the determining unit is specifically configured to delete the first IP link from the IP path information; and if there is only one IP link passing through any IP node, re-adjust a connection relationship between IP nodes in the IP path information, so that each IP node is interconnected with at least two IP nodes.

14. The allocation apparatus according to claim 11 or 12, wherein
the determining unit is specifically configured to cut a topology network, connected to a first interconnected optical node, in the optical path information by using any cutting line, wherein the first interconnected optical node is any one of all interconnected optical nodes at the optical layer; and use a quantity of optical links that the cutting line passes through as a quantity of optical links passing through the first interconnected optical node.

15. An optical path allocation apparatus, wherein the allocation apparatus is applied to an overlay network comprising an Internet Protocol IP layer and an optical layer, the IP layer comprises multiple IP nodes managed by an IP control node, the optical layer comprises multiple optical nodes managed by an optical control node, and the allocation apparatus comprises a processor, a memory, a bus, and a communications interface, wherein
the memory is configured to store a computer executable instruction, the processor and the memory are connected by using the bus, and when the allocation apparatus runs, the processor executes the computer executable instruction stored in the memory, so that the allocation apparatus performs the optical path allocation method according to any one of claims 1 to 7.

## Patentansprüche

1. Verfahren zur Zuweisung eines optischen Pfads, wobei das Verfahren auf ein Überlagerungsnetzwerk angewendet wird, das eine Internetprotokoll-, IP, Schicht und eine optische Schicht umfasst, wobei die IP-Schicht mehrere IP-Knoten umfasst, die von einem IP-Steuerknoten verwaltet werden, und die optische Schicht mehrere optische Knoten umfasst, die von einem optischen Steuerknoten verwaltet werden, und das Verfahren umfasst:
Empfangen (101) einer von dem IP-Steuerknoten gesendeten IP-Verknüpfungsanpassungsanforderung, wobei die IP-Verknüpfungsanpassungsanforderung eine Kennung einer ersten IP-Verknüpfung trägt, die hinzugefügt oder gelöscht werden muss;
Erhalten (102) aktueller Informationen zur Topologie der optischen Schicht, wobei die Informationen zur Topologie der optischen Schicht dazu verwendet werden, eine physikalische Verbindungsbeziehung zwischen optischen Knoten, die die optischen Pfade in der optischen Schicht durchlaufen, anzugeben;
Bestimmen von optischen Pfadinformationen gemäß der Kennung der ersten IP-Verknüpfung und der Informationen zur Topologie der optischen Schicht, wobei die optischen Pfadinformationen dazu verwendet werden, alle optischen Pfade in der optischen Schicht anzugeben, die erhalten werden, nachdem die erste IP-Verknüpfung hinzugefügt oder gelöscht wurde, in den optischen Pfadinformationen es mindestens zwei optische Verbindungen gibt, die jeden verbundenen optischen Knoten durchlaufen, und der verbundene optische Knoten ein optischer Knoten ist, der mit einem IP-Knoten verbunden ist; und
Senden (106) der optischen Pfadinformationen an den optischen Steuerknoten, so dass der optische Steuerknoten einen optischen Pfad in der optischen Schicht gemäß den optischen Pfadinformationen einrichtet.

2. Verfahren nach Anspruch 1, wobei die IP-Verknüpfungsanpassungsanforderung dazu verwendet wird, in der optischen Schicht einen optischen Pfad hinzuzufügen, der der ersten IP-Verknüpfung entspricht;
nach dem Erhalten der aktuellen Informationen zur Topologie der optischen Schicht das Verfahren ferner umfasst:
Erhalten (103) von aktuellen Informationen zur Topologie der IP-Schicht, wobei die Informationen zur Topologie der IP-Schicht dazu verwendet werden, eine Verbindungsbeziehung zwischen IP-Knoten, die IP-Pfade auf der IP-Schicht durchlaufen, anzugeben; und
die Informationen zum Bestimmen des optischen Pfads gemäß der Kennung der ersten IP-Verknüpfung und der Informationen zur Topologie der optischen Schicht umfassen:
Bestimmen (104), gemäß der Kennung der ersten IP-Verknüpfung und der Informationen zur Topologie der IP-Schicht, von IP-Pfadinformationen, die erhalten werden, nachdem die erste IP-Verknüpfung hinzugefügt wurde, wobei jeder IP-Knoten in den IP-Pfadinformationen mit mindestens zwei IP-Knoten verbunden ist; und
Bestimmen (105) der optischen Pfadinformationen gemäß den IP-Pfadinformationen und den Informationen zur Topologie der optischen Schicht, um so den optischen Pfad in der optischen Schicht, der der ersten IP-Verknüpfung entspricht, zu bestimmen.

3. Verfahren nach Anspruch 2, wobei das Bestimmen, gemäß der Kennung der ersten IP-Verknüpfung und der Informationen zur Topologie der IP-Schicht, von IP-Pfadinformationen, die nach der ersten IP-Verknüpfung erhaltenen werden, umfasst:
Hinzufügen der ersten IP-Verknüpfung zu den IP-Pfadinformationen gemäß der Kennung der ersten IP-Verknüpfung, wobei die erste IP-Verknüpfung eine IP-Verknüpfung zwischen einem ersten IP-Knoten und einem zweiten IP-Knoten ist;
falls der erste IP-Knoten nur mit dem zweiten IP-Knoten verbunden ist, Hinzufügen einer zweiten IP-Verknüpfung zwischen dem ersten IP-Knoten und einem anderen IP-Knoten zu den IP-Pfadinformationen; und
falls der zweite IP-Knoten nur mit dem ersten IP-Knoten verbunden ist, Hinzufügen einer dritten IP-Verknüpfung zwischen dem zweiten IP-Knoten und einem anderen IP-Knoten zu den IP-Pfadinformationen.

4. Verfahren nach Anspruch 2 oder 3, wobei das Bestimmen der optischen Pfadinformationen gemäß den IP-Pfadinformationen und den Informationen zur Topologie der optischen Schicht umfasst:
Bestimmen, gemäß den IP-Pfadinformationen und den Informationen zur Topologie der optischen Schicht, von optischen Pfadinformationen, die von der optischen Schicht sind und entsprechend jeder IP-Verknüpfung in den IP-Pfadinformationen;
Sammeln von Statistik über eine Menge von optischen Verbindungen, die jeden verbundenen optischen Knoten durchlaufen, in den optischen Pfadinformationen; und
falls es nur eine optische Verbindung gibt, die jeden verbundenen optischen Knoten durchläuft, Neuanpassen eines optischen Pfads, der irgendeiner IP-Verknüpfung entspricht, in den optischen Pfadinformationen, bis mindestens zwei optische Verbindungen jeden verbundenen optischen Knoten durchlaufen.

5. Verfahren nach einem der Ansprüche 1 bis 4, wobei die IP-Verknüpfungsanpassungsanforderung dazu verwendet wird, einen optischen Pfad in der optischen Schicht, der der ersten IP-Verknüpfung entspricht, zu löschen; und
das Bestimmen des optischen Pfads gemäß der Kennung der ersten IP-Verknüpfung und den Informationen zur Topologie der optischen Schicht umfasst:
Löschen des optischen Pfads in der optischen Schicht, der der ersten IP-Verknüpfung entspricht, aus den optischen Pfadinformationen;
Sammeln von Statistik über eine Menge von optischen Verbindungen, die jeden verbundenen optischen Knoten durchlaufen, in den optischen Pfadinformationen; und
falls es nur eine optische Verbindung gibt, die jeden verbundenen optischen Knoten durchläuft, Neuanpassen eines optischen Pfads, der irgendeiner IP-Verknüpfung entspricht, in den optischen Pfadinformationen, bis mindestens zwei optische Verbindungen jeden verbundenen optischen Knoten durchlaufen.

6. Verfahren nach Anspruch 5, vor dem Löschen des optischen Pfads in der optischen Schicht, der der ersten IP-Verknüpfung entspricht, aus der optischen Pfadinformation, ferner umfassend:
Löschen der ersten IP-Verknüpfung aus den IP-Pfadinformationen; und
falls es nur eine IP-Verknüpfung gibt, die irgendeinen IP-Knoten durchläuft, Neuanpassen einer Verbindungsbeziehung zwischen IP-Knoten in den IP-Pfadinformationen, so dass jeder IP-Knoten mit mindestens zwei IP-Knoten verbunden ist.

7. Verfahren nach Anspruch 4 oder 5, wobei das Sammeln von Statistik über eine Menge von optischen Verbindungen, die jeden verbundenen optischen Knoten durchläuft, in den optischen Pfadinformationen umfasst:
Schneiden eines Topologie-Netzwerks, das mit einem ersten verbundenen optischen Knoten verbunden ist, in den optischen Pfadinformationen unter Verwendung irgendeiner Schnittlinie, wobei der erste verbunden optische Knoten irgendeiner aus allen verbundenen optischen Knoten in der optischen Schicht ist; und
Verwenden einer Menge von optischen Verbindungen, die die Schnittlinie durchläuft, als eine Menge von optischen Verbindungen, die den ersten verbundenen optischen Knoten durchläuft.

8. Vorrichtung zur Zuweisung eines optischen Pfads, wobei die Vorrichtung zur Zuweisung auf ein Überlagerungsnetzwerk angewendet wird, das eine Internetprotokoll-, IP, Schicht und eine optische Schicht umfasst, wobei die IP-Schicht mehrere IP-Knoten umfasst, die von einem IP-Steuerknoten verwaltet werden, und die optische Schicht mehrere optische Knoten umfasst, die von einem optischen Steuerknoten verwaltet werden, und die Vorrichtung zur Zuweisung umfasst:
eine Erlangungseinheit (21), die dazu ausgelegt ist, eine von dem IP-Steuerknoten gesendete IP-Verknüpfungsanpassungsanforderung zu empfangen, wobei die IP-Verknüpfungsanpassungsanforderung eine Kennung einer ersten IP-Verknüpfung, die hinzugefügt oder gelöscht werden muss, trägt; und aktuelle Informationen zur Topologie der optischen Schicht zu erhalten, wobei die Informationen zur Topologie der optischen Schicht dazu verwendet werden, eine physikalische Verbindungsbeziehung zwischen optischen Knoten, die die optischen Pfade in der optischen Schicht durchlaufen, anzugeben;
eine Bestimmungseinheit (22), die dazu ausgelegt ist, optische Pfadinformationen gemäß der Kennung der ersten IP-Verknüpfung und der Informationen zur Topologie der optischen Schicht zu bestimmen, wobei die optischen Pfadinformationen dazu verwendet werden, alle optischen Pfade in der optischen Schicht anzugeben, die erhalten werden, nachdem die erste IP-Verknüpfung hinzugefügt oder gelöscht wurde, es mindestens zwei optische Verbindungen gibt, die jeden verbundenen optischen Knoten in den optischen Pfadinformationen durchlaufen, und der verbundene optische Knoten ein optischer Knoten ist, der mit einem IP-Knoten verbunden ist; und
eine Sendeeinheit (23), die dazu ausgelegt ist, die optischen Pfadinformationen an den optischen Steuerknoten zu senden, so dass der optische Steuerknoten einen optischen Pfad in der optischen Schicht gemäß den optischen Pfadinformationen einrichtet.

9. Vorrichtung zur Zuweisung nach Anspruch 8, wobei die IP-Verknüpfungsanpassungsanforderung dazu verwendet wird, in der optischen Schicht einen optischen Pfad, der der ersten IP-Verknüpfung entspricht, hinzuzufügen;
die Erlangungseinheit ferner dazu ausgelegt ist, aktuelle Informationen zur Topologie der IP-Schicht zu erhalten, wobei die Informationen zur Topologie der IP-Schicht dazu verwendet werden, eine Verbindungsbeziehung zwischen IP-Knoten, die von IP-Pfaden in der IP-Schicht durchlaufen werden, anzugeben; und
die Bestimmungseinheit speziell dazu ausgelegt ist, gemäß der Kennung der ersten IP-Verknüpfung und der Informationen zur Topologie der IP-Schicht, IP-Pfadinformationen, die erhalten werden, nachdem die erste IP-Verknüpfung hinzugefügt wurde, zu bestimmen, wobei jeder IP-Knoten in den IP-Pfadinformationen mit mindestens zwei IP-Knoten verbunden ist; und die optischen Pfadinformationen gemäß den IP-Pfadinformationen und den Informationen zur Topologie der optischen Schicht zu bestimmen, um so den optischen Pfad in der optischen Schicht, der der ersten IP-Verknüpfung entspricht, zu bestimmen.

10. Vorrichtung zur Zuweisung nach Anspruch 9, wobei
die Bestimmungseinheit speziell dazu ausgelegt ist, den IP-Pfadinformationen die erste IP-Verknüpfung gemäß der Kennung der ersten IP-Verknüpfung hinzuzufügen, wobei die erste IP-Verknüpfung eine IP-Verknüpfung zwischen einem ersten IP-Knoten und einem zweiten IP-Knoten ist; falls der erste IP-Knoten nur mit dem zweiten IP-Knoten verbunden ist, den IP-Pfadinformationen eine zweite IP-Verknüpfung zwischen dem ersten IP-Knoten und einem anderen IP-Knoten hinzuzufügen; und falls der zweite IP-Knoten nur mit dem ersten IP-Knoten verbunden ist, den IP-Pfadinformationen eine dritte IP-Verknüpfung zwischen dem zweiten IP-Knoten und einem anderen IP-Knoten hinzuzufügen.

11. Vorrichtung zur Zuweisung nach Anspruch 9 oder 10, wobei
die Bestimmungseinheit speziell dazu ausgelegt ist, gemäß den IP-Pfadinformationen und den Informationen zur Topologie der optischen Schicht optische Pfadinformationen zu bestimmen, die von der optischen Schicht sind und entsprechend jeder IP-Verknüpfung in den IP-Pfadinformationen; Statistik über eine Menge optischer Verbindungen, die jeden verbundenen optischen Knoten durchlaufen, in den optischen Pfadinformation zu sammeln; und falls es nur eine optische Verbindung gibt, die jeden verbundenen optischen Knoten durchläuft, einen optischen Pfad, der irgendeiner IP-Verknüpfung entspricht, in den optischen Pfadinformationen neu anzupassen, bis es mindestens zwei optische Verbindungen gibt, die jeden verbundenen optischen Knoten durchlaufen.

12. Vorrichtung zur Zuweisung nach einem der Ansprüche 8 bis 11, wobei die IP-Verknüpfungsanpassungsanforderung dazu verwendet wird, einen optischen Pfad in der optischen Schicht, der der ersten IP-Verknüpfung entspricht, zu löschen; und
die Bestimmungseinheit speziell dazu ausgelegt ist, den optischen Pfad in der optischen Schicht, der der ersten IP-Verknüpfung entspricht, aus den optischen Pfadinformationen zu löschen; Statistiken über eine Menge optischer Verbindungen, die jeden verbundenen optischen Knoten durchlaufen, in den optischen Pfadinformationen zu sammeln; und falls es nur eine optische Verbindung gibt, die jeden verbundenen optischen Knoten durchläuft, einen optischen Pfad, der irgendeiner IP-Verknüpfung entspricht, in den optischen Pfadinformationen neu anzupassen, bis es mindestens zwei optische Verbindungen gibt, die jeden verbundenen optischen Knoten durchlaufen.

13. Vorrichtung zur Zuweisung nach Anspruch 12, wobei
die Bestimmungseinheit speziell dazu ausgelegt ist, die erste IP-Verknüpfung aus den IP-Pfadinformationen zu löschen; und falls es nur ein IP-Verknüpfung, die irgendeinen IP-Knoten durchläuft, eine Verbindungsbeziehung zwischen IP-Knoten in den IP-Pfadinformationen neu anzupassen, so dass jeder IP-Knoten mit mindestens zwei IP-Knoten verbunden ist.

14. Vorrichtung zur Zuweisung nach Anspruch 11 oder 12, wobei
die Bestimmungseinheit speziell dazu ausgelegt ist, ein Topologie-Netzwerk, das mit einem ersten verbundenen optischen Knoten verbunden ist, in den optischen Pfadinformationen unter Verwendung irgendeiner Schnittlinie zu schneiden, wobei der erste verbundene optische Knoten irgendeiner aus allen verbundenen optischen Knoten in der optischen Schicht ist; und eine Menge von optischen Verbindungen, die die Schnittlinie durchläuft, als eine Menge von optischen Verbindungen, die den ersten verbundenen optischen Koten durchlaufen, zu verwenden.

15. Vorrichtung zur Zuweisung eines optischen Pfads, wobei die Vorrichtung zur Zuweisung auf ein Überlagerungsnetzwerk angewendet wird, das eine Internetprotokoll-, IP, Schicht und eine optische Schicht umfasst, wobei die IP-Schicht mehrere IP-Knoten umfasst, die von einem IP-Steuerknoten verwaltet werden, und die optische Schicht mehrere optische Knoten umfasst, die von einem optischen Steuerknoten verwaltet werden, und die Vorrichtung zur Zuweisung einen Prozessor, einen Speicher, einen Bus und eine Kommunikationsschnittstelle umfasst, wobei
der Speicher dazu ausgelegt ist, eine computerausführbare Anweisung zu speichern, der Prozessor und der Speicher unter Verwendung des Busses verbunden sind, und wenn die Vorrichtung zur Zuweisung läuft, der Prozessor die computerausführbare Anweisung, die in dem Speicher gespeichert ist, ausführt, so dass die Vorrichtung zur Zuweisung das Verfahren zur Zuweisung eines optischen Pfads nach einem der Ansprüche 1 bis 7 durchführt.

## Revendications

1. Procédé d'attribution de chemin optique, appliqué à un réseau superposé comportant une couche IP, protocole Internet, et une couche optique, la couche IP comprenant plusieurs noeuds IP gérés par un noeud de contrôle IP, la couche optique comportant plusieurs noeuds optiques gérés par un noeud de contrôle optique, et le procédé comprenant les étapes suivantes :
recevoir (101) une requête d'ajustement de liaison IP envoyée par le noeud de contrôle IP, la requête d'ajustement de liaison IP contenant un identifiant d'une première liaison IP qui doit être ajoutée ou supprimée ;
obtenir (102) des informations de topologie de couche optique courantes, les informations de topologie de couche optique étant utilisées pour indiquer une relation de connexion physique entre des noeuds optiques que des chemins optiques au niveau de la couche optique traversent ;
déterminer des informations de chemin optique selon l'identifiant de la première liaison IP et les informations de topologie de couche optique, les informations de chemin optique étant utilisées pour indiquer tous les chemins optiques au niveau de la couche optique qui sont obtenus après que la première liaison IP a été ajoutée ou supprimée : il y a au moins deux liaisons optiques traversant chaque noeud optique interconnecté, dans les informations de chemin optique, et le noeud optique interconnecté est un noeud optique connecté à un noeud IP ; et
envoyer (106) les informations de chemin optique au noeud de contrôle optique, afin que le noeud de contrôle optique établisse un chemin optique au niveau de la couche optique selon les informations de chemin optique.

2. Procédé selon la revendication 1, dans lequel la requête d'ajustement de liaison IP est utilisée pour ordonner d'ajouter un chemin optique, au niveau de la couche optique, correspondant à la première liaison IP ;
après l'étape consistant à obtenir des informations de topologie de couche optique courantes, le procédé comprend en outre :
obtenir (103) des informations de topologie de couche IP courantes, les informations de topologie de couche IP étant utilisées pour indiquer une relation de connexion entre des noeuds IP que des chemins IP au niveau de la couche IP traversent ; et
l'étape consistant à déterminer des informations de chemin optique selon l'identifiant de la première liaison IP et les informations de topologie de couche optique comprend :
déterminer (104), selon l'identifiant de la première liaison IP et les informations de topologie de couche IP, des informations de chemin IP obtenues après que la première liaison IP a été ajoutée, chaque noeud IP dans les informations de chemin IP étant interconnecté à au moins deux noeuds IP ; et
déterminer (105) les informations de chemin optique selon les informations de chemin IP et les informations de topologie de couche optique, afin de déterminer le chemin optique, au niveau de la couche optique, correspondant à la première liaison IP.

3. Procédé selon la revendication 2, dans lequel l'étape consistant à déterminer, selon l'identifiant de la première liaison IP et les informations de topologie de couche IP, des informations de chemin IP obtenues après la première liaison IP comprend :
ajouter la première liaison IP aux informations de chemin IP selon l'identifiant de la première liaison IP, la première liaison IP étant une liaison IP entre un premier noeud IP et un deuxième noeud IP ;
si le premier noeud IP est interconnecté uniquement avec le deuxième noeud IP, ajouter une deuxième liaison IP entre le premier noeud IP et un autre noeud IP aux informations de chemin IP ; et
si le deuxième noeud IP est interconnecté uniquement avec le premier noeud IP, ajouter une troisième liaison IP entre le deuxième noeud IP et un autre noeud IP aux informations de chemin IP.

4. Procédé selon la revendication 2 ou 3 dans lequel l'étape consistant à déterminer les informations de chemin optique selon les informations de chemin IP et les informations de topologie de couche optique comprend :
déterminer, selon les informations de chemin IP et les informations de topologie de couche optique, des informations de chemin optique qui concernent la couche optique et correspondant à chaque liaison IP dans les informations de chemin IP ;
collecter des statistiques sur une quantité de liaisons optiques, traversant chaque noeud optique interconnecté, dans les informations de chemin optique ; et
s'il n'existe qu'une seule liaison optique traversant chaque noeud optique interconnecté, rajuster un chemin optique, correspondant aux liaisons IP, dans les informations de chemin optique jusqu'à ce qu'il y ait au moins deux liaisons optiques traversant chaque noeud optique interconnecté.

5. Procédé selon l'une quelconque des revendications 1 à 4, dans lequel la requête d'ajustement de liaison IP est utilisée pour ordonner de supprimer un chemin optique, au niveau de la couche optique, correspondant à la première liaison IP ; et
l'étape consistant à déterminer des informations de chemin optique selon l'identifiant de la première liaison IP et les informations de topologie de couche optique comprend :
supprimer le chemin optique, au niveau de la couche optique, correspondant à la première liaison IP à partir des informations de chemin optique ;
collecter des statistiques sur une quantité de liaisons optiques, traversant chaque noeud optique interconnecté, dans les informations de chemin optique ; et
s'il n'existe qu'une seule liaison optique traversant chaque noeud optique interconnecté, rajuster un chemin optique, correspondant aux liaisons IP, dans les informations de chemin optique jusqu'à ce qu'il y ait au moins deux liaisons optiques traversant chaque noeud optique interconnecté.

6. Procédé selon la revendication 5, avant l'étape consistant à supprimer le chemin optique, au niveau de la couche optique, correspondant à la première liaison IP à partir des informations de chemin optique, comprenant en outre :
supprimer la première liaison IP à partir des informations de chemin IP ; et
s'il n'existe qu'une seule liaison IP traversant les noeuds IP, rajuster une relation de connexion entre des noeuds IP dans les informations de chemin IP, afin que chaque noeud IP soit interconnecté à au moins deux noeuds IP.

7. Procédé selon la revendication 4 ou 5, dans lequel l'étape consistant à collecter des statistiques sur une quantité de liaisons optiques, traversant chaque noeud optique interconnecté, dans les informations de chemin optique comprend :
découper un réseau de topologie, connecté à un premier noeud optique interconnecté, dans les informations de chemin optique en utilisant une ligne de découpe, le premier noeud optique interconnecté étant un noeud optique quelconque parmi tous les noeuds optiques interconnectés au niveau de la couche optique ; et
utiliser une quantité de liaisons optiques que la ligne de découpe traverse comme une quantité de liaisons optiques traversant le premier noeud optique interconnecté.

8. Appareil d'attribution de chemin optique, dans lequel l'appareil d'attribution est appliqué à un réseau superposé comportant une couche IP, protocole Internet, et une couche optique, la couche IP comprenant plusieurs noeuds IP gérés par un noeud de contrôle IP, la couche optique comportant plusieurs noeuds optiques gérés par un noeud de contrôle optique, et l'appareil d'attribution comprend :
une unité d'obtention (21), configurée pour recevoir une requête d'ajustement de liaison IP envoyée par le noeud de contrôle IP, la requête d'ajustement de liaison IP contenant un identifiant d'une première liaison IP qui doit être ajoutée ou supprimée ;
et obtenir des informations de topologie de couche optique courantes, les informations de topologie de couche optique étant utilisées pour indiquer une relation de connexion physique entre des noeuds optiques que des chemins optiques au niveau de la couche optique traversent ;
une unité de détermination (22), configurée pour déterminer des informations de chemin optique selon l'identifiant de la première liaison IP et les informations de topologie de couche optique, les informations de chemin optique étant utilisées pour indiquer tous les chemins optiques au niveau de la couche optique qui sont obtenus après que la première liaison IP a été ajoutée ou supprimée : il y a au moins deux liaisons optiques traversant chaque noeud optique interconnecté, dans les informations de chemin optique, et le noeud optique interconnecté est un noeud optique connecté à un noeud IP ; et
une unité d'envoi (23), configurée pour envoyer les informations de chemin optique au noeud de contrôle optique, afin que le noeud de contrôle optique établisse un chemin optique au niveau de la couche optique selon les informations de chemin optique.

9. Appareil d'attribution selon la revendication 8, dans lequel la requête d'ajustement de liaison IP est utilisée pour ordonner d'ajouter un chemin optique, au niveau de la couche optique, correspondant à la première liaison IP ;
l'unité d'obtention est en outre configurée pour obtenir des informations de topologie de couche IP courantes, les informations de topologie de couche IP étant utilisées pour indiquer une relation de connexion entre des noeuds IP que des chemins IP au niveau de la couche IP traversent ; et
l'unité de détermination est configurée spécifiquement pour déterminer, selon l'identifiant de la première liaison IP et les informations de topologie de couche IP, des informations de chemin IP obtenues après que la première liaison IP a été ajoutée, chaque noeud IP dans les informations de chemin IP étant interconnecté à au moins deux noeuds IP ; et déterminer les informations de chemin optique selon les informations de chemin IP et les informations de topologie de couche optique, afin de déterminer le chemin optique, au niveau de la couche optique, correspondant à la première liaison IP.

10. Appareil d'attribution selon la revendication 9, dans lequel :
l'unité de détermination est configurée spécifiquement pour ajouter la première liaison IP aux informations de chemin IP selon l'identifiant de la première liaison IP, la première liaison IP étant une liaison IP entre un premier noeud IP et un deuxième noeud IP ; si le premier noeud IP est interconnecté uniquement avec le deuxième noeud IP, ajouter une deuxième liaison IP entre le premier noeud IP et un autre noeud IP aux informations de chemin IP ; et si le deuxième noeud IP est interconnecté uniquement avec le premier noeud IP, ajouter une troisième liaison IP entre le deuxième noeud IP et un autre noeud IP aux informations de chemin IP.

11. Appareil d'attribution selon la revendication 9 ou 10, dans lequel :
l'unité de détermination est configurée spécifiquement pour déterminer, selon les informations de chemin IP et les informations de topologie de couche optique, des informations de chemin optique qui concernent la couche optique et correspondant à chaque liaison IP dans les informations de chemin IP ; collecter des statistiques sur une quantité de liaisons optiques, traversant chaque noeud optique interconnecté, dans les informations de chemin optique ; et s'il n'existe qu'une seule liaison optique traversant chaque noeud optique interconnecté, rajuster un chemin optique, correspondant aux liaisons IP, dans les informations de chemin optique jusqu'à ce qu'il y ait au moins deux liaisons optiques traversant chaque noeud optique interconnecté.

12. Appareil d'attribution selon l'une quelconque des revendications 8 à 11, dans lequel la requête d'ajustement de liaison IP est utilisée pour ordonner de supprimer un chemin optique, au niveau de la couche optique, correspondant à la première liaison IP ; et l'unité de détermination est configurée spécifiquement pour supprimer le chemin optique, au niveau de la couche optique, correspondant à la première liaison IP à partir des informations de chemin optique ; collecter des statistiques sur une quantité de liaisons optiques, traversant chaque noeud optique interconnecté, dans les informations de chemin optique ; et s'il n'existe qu'une seule liaison optique traversant chaque noeud optique interconnecté, rajuster un chemin optique, correspondant aux liaisons IP, dans les informations de chemin optique jusqu'à ce qu'il y ait au moins deux liaisons optiques traversant chaque noeud optique interconnecté.

13. Appareil d'attribution selon la revendication 12, dans lequel :
l'unité de détermination est configurée spécifiquement pour supprimer la première liaison IP à partir des informations de chemin IP ; et s'il n'existe qu'une seule liaison IP traversant les noeuds IP, rajuster une relation de connexion entre des noeuds IP dans les informations de chemin IP, afin que chaque noeud IP soit interconnecté à au moins deux noeuds IP.

14. Appareil d'attribution selon la revendication 11 ou 12, dans lequel :
l'unité de détermination est configurée spécifiquement pour découper un réseau de topologie, connecté à un premier noeud optique interconnecté, dans les informations de chemin optique en utilisant une ligne de découpe, le premier noeud optique interconnecté étant un noeud optique quelconque parmi tous les noeuds optiques interconnectés au niveau de la couche optique ; et utiliser une quantité de liaisons optiques que la ligne de découpe traverse comme une quantité de liaisons optiques traversant le premier noeud optique interconnecté.

15. Appareil d'attribution de chemin optique, dans lequel l'appareil d'attribution est appliqué à un réseau superposé comportant une couche IP, protocole Internet, et une couche optique, la couche IP comprenant plusieurs noeuds IP gérés par un noeud de contrôle IP, la couche optique comportant plusieurs noeuds optiques gérés par un noeud de contrôle optique, et l'appareil d'attribution comprenant un processeur, une mémoire, un bus, et une interface de communication,
la mémoire étant configurée pour stocker une instruction exécutable par ordinateur, le processeur et la mémoire étant connectés en utilisant le bus, et lorsque l'appareil d'attribution fonctionne, le processeur exécute l'instruction exécutable par ordinateur stockée dans la mémoire, afin que l'appareil d'attribution mette en oeuvre le procédé d'attribution de chemin optique selon l'une quelconque des revendications 1 à 7.
